**Europäisches Patentamt**

**European Patent Office**

**Office européen des brevets**

(19)

(11) Veröffentlichungsnummer : **0 182 991**
**B1**

(12) **EUROPÄISCHE PATENTSCHRIFT**

(45) Veröffentlichungstag der Patentschrift :
08.07.87

(51) Int. Cl.⁴ : **B 60 R 11/02,** B 60 R 25/00

(21) Anmeldenummer : 85111729.1

(22) Anmeldetag : 17.09.85

(54) **Diebstahlsicherung für in Kraftfahrzeuge mit Alarmanlage eingebaute Zusatzgeräte, insbesondere Autoradios, Kassettengeräte und dergleichen.**

(30) Priorität : 30.11.84 DE 3443650

(43) Veröffentlichungstag der Anmeldung :
04.06.86 Patentblatt 86/23

(45) Bekanntmachung des Hinweises auf die Patenterteilung : 08.07.87 Patentblatt 87/28

(84) Benannte Vertragsstaaten :
DE FR GB IT

(56) Entgegenhaltungen :
EP-A- 0 133 166
DE-A- 2 630 331
DE-A- 2 903 176
FR-A- 1 325 837

(73) Patentinhaber : **Blaupunkt-Werke GmbH**
**Robert-Bosch-Strasse 200**
**D-3200 Hildesheim (DE)**

(72) Erfinder : **Knakowski, Rolf**
**Königstrasse 31**
**D-3200 Hildesheim (DE)**
Erfinder : **Fahlbusch, Dieter**
**Alfelder Strasse 51**
**D-3201 Diekholzen (DE)**

(74) Vertreter : **Eilers, Norbert, Dipl.-Phys.**
**Blaupunkt-Werke GmbH Robert-Bosch-Strasse 200**
**D-3200 Hildesheim (DE)**

**Beschreibung**

Die Erfindung betrifft eine Diebstahlsicherung für in Kraftfahrzeuge eingebaute Zusatzgeräte, insbesondere Autoradios, Kassettengeräte und dergleichen, die in einen Einschubrahmen, der in einer Einbauöffnung einer Kraftfahrzeugwand befestigt ist, von deren Vorderseite her eingeschoben und damit oder der Kraftfahrzeugwand mechanisch lösbar verbunden sind. Dabei kann die Einbauöffnung zum Beispiel im Armaturenbrett oder in einer besonderen Gerätekonsole vorgegeben sein. (DE-A1-2 903 176).

Hochwertige Zusatzgeräte, wie zum Beispiel Autoradios, werden häufig entwendet, sobald dem Dieb einmal die unbemerkte Öffnung des Kraftfahrzeuges gelungen ist. Gegen solchen Diebstahl hilft auch eine schwer zugängliche mechanische Verrastung des Zusatzgeräts mit seinem Einschubrahmen nicht immer, da die Verrastung zum raschen Ausbau des Zusatzgerätes für Reparaturen mit nicht allzu kompliziertem Werkzeug lösbar sein muß, das sich ein geschickter Dieb auch selbst herstellen kann.

Die Erfindung hat deshalb die Aufgabe, eine zusätzliche, einfache und mit den vorhandenen Bauelementen realisierbare, schwer zugängliche und nicht-störanfällige elektronische Diebstahlsicherung in Ergänzung der üblichen mechanischen Befestigungen zu schaffen, die bei Zugriff für unbefugten Ausbau des Zusatzgerätes einen auffälligen Alarm auslöst. Der Alarm soll den Dieb verjagen und den Autobesitzer oder Dritte auf die unbefugte Manipulation aufmerksam machen.

Die Erfindung löst diese Aufgabe durch die im Kennzeichen des Anspruchs 1 angegebenen technischen Merkmale.

Laut Erfindung bilden die vorgegebenen Bauelemente, Gehäuse des Zusatzgeräts und dessen Einschubrahmen, Teile eines elektrischen Schalters, nämlich die Kontakte, der durch ihre gegenseitige und sozusagen den Schalthebel ganz oder teilweise ersetzende Verschiebung betätigt wird und die Alarmanlage des Kraftfahrzeugs in Betrieb setzt. Das Alarm-signal kann akustischer und zusätzlich optischer Art sein. Dazu sitzt der elektrische Schalter bei der Erfindung im Steuerkreis der Hupe und gegebenenfalls zusätzlich der Warnleuchten. Im zweiten Fall läßt sich der Tatort bei Dunkelheit auf dicht beparkten Plätzen schneller ermitteln. Da das Gehäuse des Zusatzgerätes und der Einschubrahmen mit Ausnahme der in der Regel aus Kunststoff bestehenden und die Bedienungsorgane und Skalen des Zusatzgerätes tragenden Gehäuse-Frontplatte auf der von außen unzugänglichen Rückseite der Einbauwände liegen, kann dieser elektrische Schalter von Dieben weder umgangen noch ohne Auslösen des Alarms beseitigt oder totgelegt werden, ist auch unbeabsichtigtem Hantieren oder Spielen des Kraftfahrzeugbesitzers oder von Mitfahrern entzogen und durch seinen äußerst einfachen Aufbau praktisch störungsfrei. Die Diebstahlsicherung geht beim Einschieben des Zusatzgeräts in den Einschubrahmen in Bereitschaftstellung und löst bereits bei geringster gegenseitiger Verschiebung dieser Teile den Alarm aus, der auch bei vollständiger Entfernung des Zusatzgerätes aus Einschubrahmen, Einbauöffnung und Kraftfahrzeug nicht mehr unterbrochen wird. Die Ausbildung von Zusatzgerät-Gehäuse und Einschubrahmen zum elektrischen Schalter bedarf nur sehr geringer Ergänzung wie der vorgegebenen Elemente und läßt sich ohne jeden Eingriff in das Zusatzgerät verwirklichen.

Weitere Ausführungen und Ausgestaltungen der diese und andere Vorteile aufweisenden Erfindung sind in den Unteransprüchen genannt.

So kann bei der erfindungsgemäßen Ausführung mit Ausbildung des elektrischen Schalters als Ruhekontakt der metallische Einschubrahmen eine ihm gegenüber elektrisch isolierte Kontaktfeder tragen, deren freies Ende den einen Schalterkontakt bildet und beim Einschub des Zusatzgerätes in den Einschubrahmen auf einer kleinen, elektrisch leitenden und den anderen Schalterkontakt bildenden Fläche der Seitenwand des Zusatzgeräts aufliegt, bei geringer Verschiebung des Zusatzgeräts im Einschubrahmen durch Herausziehen, dagegen auf eine längs der Seitenwand vorgesehene, elektrisch nicht leitende Gleitbahn aufläuft. Bei vorgegebenem Einschubrahmen und Zusatzgerät-Gehäuse aus in der Regel hinter der Frontplatte blankem Metall muß man hier lediglich auf der Seitenwand die nicht leitende Gleitbahn durch Aufkleben eines dünnen Isolierstreifens oder Beschichtung herstellen und die Kontaktfeder elektrisch isoliert, im Ruhezustand mit dem Gerätegehäuse kontaktnehmend, auf dem Einschubrahmen befestigen. Liegen der eletrische Schalter dann über ein elektro-mechanisches oder ein elektronisches Relais im Alarmkreis und der Einschubrahmen auf Massepotential, dann kommt es bereits bei geringster Verschiebung des Zusatzgeräts gegenüber dem Einschubrahmen zum Alarm, der auch nach der vollen Entfernung des Zusatzgeräts nicht mehr abreißt, bis er von befugter Hand aufgehoben wird. Diese Ausführung der Erfindung arbeitet unabhängig von der speziellen Art oder der Existenz einer Verrastung. Das Zusatzgerät könnte mit der Einbauwand oder dem Einschubrahmen auch lediglich verschraubt oder verstiftet sein.

Bei einer anderen Ausführung der Erfindung mit Ausbildung des elektrischen Schalters als Arbeitskontakt und mit Verrastung von Zusatzgerät und Einschubrahmen durch von Seitenwänden des Gerätgehäuses in Rastfenster des Einschubrahmens einspringende, federnde Rastnasen, wie sie zum Beispiel aus der Einbaueinrichtung laut DE-A1-29 03 176 bekannt ist, kann der metallische Einschubrahmen wiederum eine ihm gegenüber elektrisch isolierte Kontaktfeder tragen, deren freies Ende hier ein Rastfenster übergreift und den einen Schalterkontakt bildet und in teilweise entspanntem Zustand auf dem den anderen Schalterkontakt bildenden Einschubrahmen aufliegt und den Schalter schließt, auf Dauer der Verrastung dagegen von einer in das Rastfenster einspringenden Rastnase vom Einschubrahmen abgehoben und gespannt wird, so daß der elektrische Schalter offen ist. Bei dieser Ausführung liegt der elektrische Schalter direkt im Alarmkreis und ist nach Einschub und Verrastung von Zusatzgerät und Einschubrahmen durch die in das Rastfenster einspringende Rastnase vom Einschubrahmen abgehoben und offen, schließt aber sofort bei geringster Verschiebung die Verbauteile mit Folge des Rückziehens der federnden Rastnase, ja bereits beim unbefugten Versuch der Lösung der Verrastung durch Einführung eines die Rastnase aus ihrem Rastfenster drückenden Lösewerkzeugs aus beliebigem Werkstoff und setzt so die Alarmanlage, wie vorstehend beschrieben, in Dauerbetrieb bis zur befugten Stillsetzung. Bei dieser Lösung ist keinerlei Maßnahme am Zusatzgerät erforderlich.

Die Kontaktfläche der Kontaktfeder kann zum sicheren Kontakt auch mit unter Umständen korrodierenden Gegenkontakten und zum leichten Übergleiten von Löchern und Lücken am Gerätgehäuse und/oder Einschubrahmen nach unten abgewinkelt und gegebenenfalls quer zur Federachse gewölbt und oberflächenvergütet sein.

Weitere Einzelheiten und Vorteile der Erfindung behandeln die nachstehende Beschreibung und die Zeichnung von Ausführungsbeispielen. Dabei zeigen :

Figur 1 eine Explosions-Darstellung von Zusatzgerät und zugehörigem Einschubrahmen mit Lösewerkzeug für ihre Verrastung und einem als Ruhekontakt ausgebildeten elektrischen Schalter für den Alarmkreis,

Figur 2 eine zum Teil weggebrochene, teilweise geschnittene Seitenansicht des in den Einschubrahmen voll eingeschobenen Zusatzgeräts laut Fig. 1 mit elektrischem Schalter als Ruhekontakt,

Figur 3 eine teilweise Seitenansicht des elektrischen Schalters laut Fig. 2,

Figur 4 eine teilweise Seitenansicht des mit dem Einschubrahmen verrasteten Zusatzgeräts als elektrischer Schalter mit Arbeitskontakt und

Figur 5 eine zum Teil weggebrochene, teilweise geschnittene Draufsicht auf das im Einschubrahmen sitzende Zusatzgerät beim Entrasten mit einem durch seine Frontplatte eingeführten Lösewerkzeug und dadurch geschlossenen elektrischen Schalter laut Fig. 4.

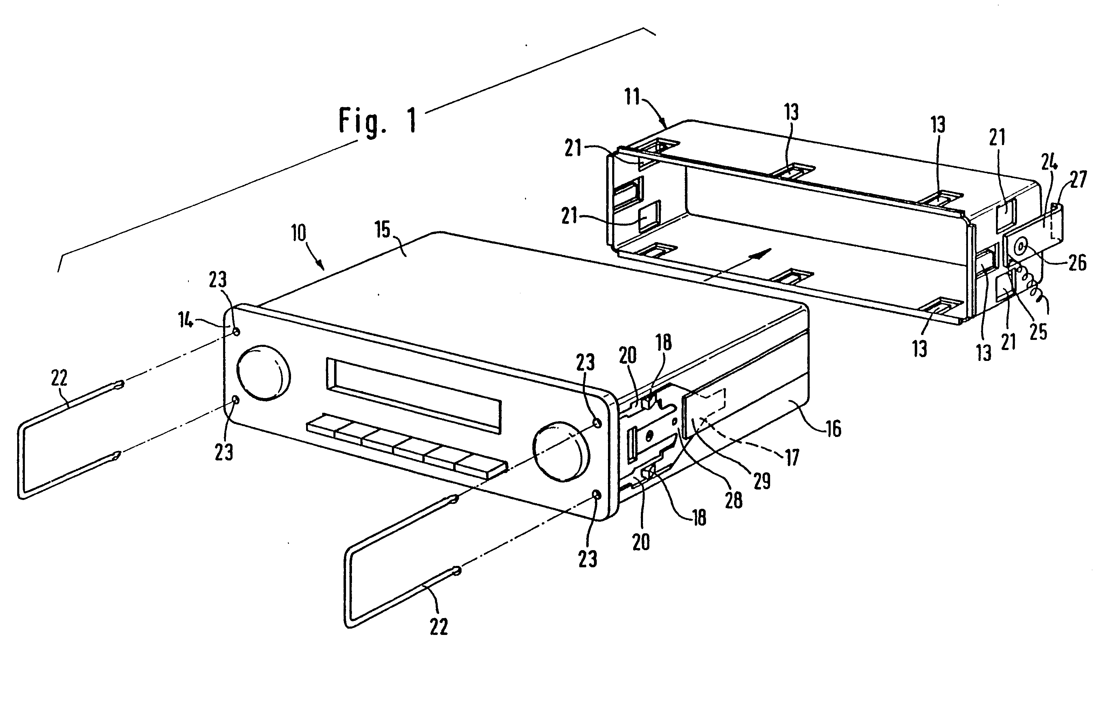

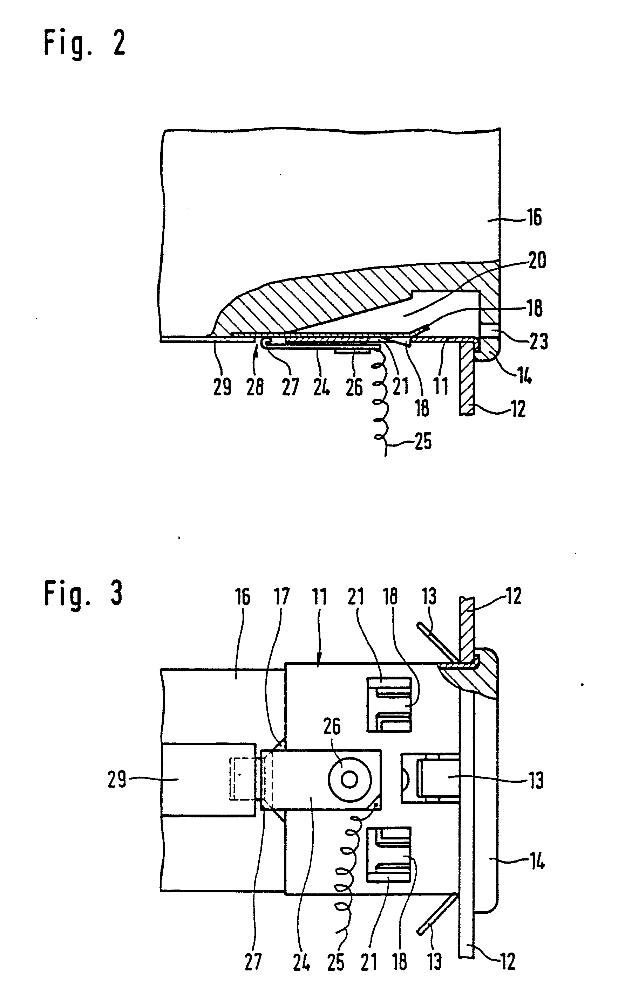

Laut Fig. 1 ist das Zusatzgerät 10, zum Beispiel ein Autoradio, in Pfeilrichtung in einen kastenförmigen und vorn und hinten offenen, metallischen Einschubrahmen 11 einschiebbar, der selbst in einer vorgegebenen Einbauöffnung einer Kraftfahrzeugwand 12 (Fig. 2 bis 5) in bekannter Weise, zum Beispiel mit hintergreifenden Laschen 13, befestigt ist. Mit Ausnahme der die Bedienungsorgane und Skalen tragenden Frontplatte 14 besteht das ganze übrige Gehäuse 15 des Zusatzgeräts 10 aus Metall oder ist metallisiert. Das Gehäuse 15 des Zysatzgeräts 10 und der Einschubrahmen 11 liegen auf Massepotential und am Minuspol der Fahrzeugbatterie. Besteht die Kraftfahrzeugwand 12 aus Kunststoff, dann muß für diese beiden Teile, in jedem Fall jedoch für den Einschubrahmen 11, ein Masseanschluß hergestellt werden.

Am Gehäuse 15 sind an seinen beiden Seitenwänden 16 je zwei von einem gemeinsamen Federträger 17 federnd getragene und schuhlöffelartig ausgebildete Rastnasen 18 derart befestigt, daß sie beim Verschieben des Zusatzgeräts 10 gegenüber dem Einschubrahmen 11 in Aussparungen 20 der Seitenwand 16 zurücktreten können, beim vollen Einschub aber in Rastfenster 21 des Einschubrahmens 11 einspringen und so das Zusatzgerät 10 mit dem Einschubrahmen 11 mechanisch fest verrasten. Diese Verrastung läßt sich nur lösen, wenn alle vier Rastnasen 18 durch Einführen von aus Stiften oder Bügeln bestehenden Lösewerkzeugen 22 durch mit den Rastnasen 18 fluchtende Durchgangsöffnung 23 in der Frontplatte 14 in die Löffelmulden der Rastnasen 18 aus den Rastfenstern 21 herausgezogen und in die Aussparungen 20 der Seitenwand 16 zurückgedrückt werden können.

Zur Heranziehung dieser bekannten Bauelemente als elektrischer Schalter für den Alarmkreis ist beim Ausführungsbeispiel nach Fig. 1 und 2 eine aus einer Blattfeder bestehende Kontaktfeder 24 etwa mittig mit ihrem den Anschluß 25 für den Alarmkreis tragenden Ende mit einem Niet 26 auf einer Seitenwand des Einschubrahmens 11 elektrisch isoliert so befestigt, daß sie mit ihrem freien und den einen Schalterkontakt bildenden und nach unten abgewinkelten und als breite, vorzugsweise eingerollte Kontaktfläche ausgebildeten Ende 27 in gespanntem Zustand bei vollem Einschub des Zusatzgeräts 10 in den Einschubrahmen 11 und Verrastung damit auf der blanken Kontaktfläche 28, hier der Federträger 17 aufliegt, die den anderen Schalterkontakt bildet.

Auf der gleichen Seitenwand 16 ist mittig ein flacher Isolierstreifen 29 aufgeklebt, der vom Gehäuseende bis kurz vor die Kontaktfläche 28 reicht. Beim Entrasten und Herausziehen des Zusatzgerätes 10 aus dem Einschubrahmen 11 läuft das Ende 27 der Kontaktfeder 24 sofort auf den Isolierstreifen auf und wird der Ruhekontakt des elektrischen Schalters getrennt und, wie bereits erläutert, der Alarmkreis geschlossen und die Alarmanlage in Betrieb genommen und bleibt auch nach vollem Entfernen des Zusatzgeräts 10 in Betrieb.

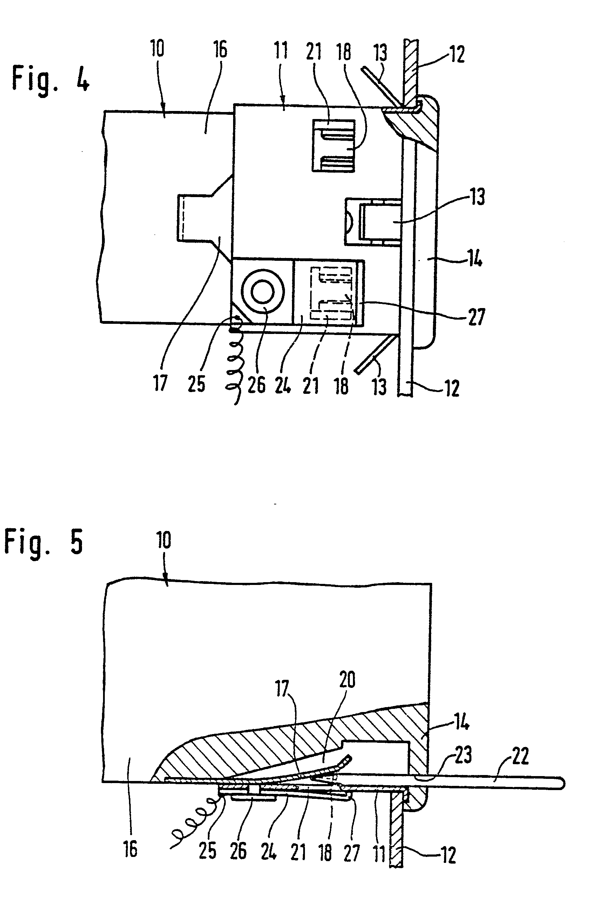

Noch einfacher und wirksamer ist die des Isolierstreifens 29 entbehrende erfindungsgemäße Ausführung des elektrischen Schalters als Arbeitskontakt gemäß den Fig. 4 und 5. Hier ist die den einen Schalterkontakt bildende und den einen Alarmkreis-Anschluß 25 tragende Kontaktfeder 24 wiederum mit einem Niet 26, jedoch um 180° in ihrer Ebene geschwenkt, elektrisch isoliert so auf einer Seitenwand des Einschubrahmens 11 befestigt, daß sie ein Rastfenster 21 übergreift und sich in teilweise entspanntem Zustand mit ihrem freien und nach unten abgewinkelten, gewölbten Ende 27 gegen den metallischen und den anderen Schalterkontakt bildenden Einschubrahmen 11 anlegen und den Alarmkreis schließen kann. Der Alarmkreis ist jedoch offen, solange das Zusatzgerät 10 im Einschubrahmen 11 verrastet ist, weil dann die federnde Rastnase 18 in das Rastfenster 21 eingesprungen ist und die Kontaktfeder 24 mit ihrem kontaktbildendem Ende vom Einschubrahmen 11 abhebt, so daß auch der elektrische Schalter und der Alarmkreis offen sind. Sobald jedoch ein Lösewerkzeug 22 in die zugeordnete Durchgangsöffnung 23 der Frontplatte 14 eingesteckt und dadurch die Rastnase 18 aus dem Rastfenster 21 in die Aussparung 20 der Seitenwand 16 zurückgedrückt und damit das Herausziehen des Zusatzgeräts 10 aus dem Einschubrahmen eingeleitet wird, kann sich auch die Kontaktfeder 24 teilweise entspannen und schließt durch Auffedern ihres freien Kontaktendes 27 auf den Einschubrahmen 11 den elektrischen Schalter, der nunmehr wiederum dei Alarmanlage auch bei voller Entfernung des Zusatzgeräts 10 in Betrieb hält bis sie von befugter Hand ausgesetzt wird.

**Patentansprüche**

1. Diebstahlsicherung für in Kraftfahrzeuge eingebaute Zusatzgeräte (10), insbesondere Autoradios, Kassettengeräte und dergleichen, die in einen Einschubrahmen (11), der in einer Einbauöffnung einer Kraftfahrzeugwand (12) befestigt ist, von deren Vorderseite her eingeschoben und damit oder der Einbauwand mechanisch lösbar verbunden sind, dadurch gekennzeichnet, daß das Gehäuse (15) des Zusatzgeräts (10) und der metallische Einschubrahmen (11) Teile eines elektrischen Schalters (24, 27, 28 bzw. 24, 27, 11, 18) sind, der durch ihre gegenseitige Verschiebung betätigt wird und eine Alarmanlage in Betrieb setzt.

2. Diebstahlsicherung nach Anspruch 1 mit Ausbildung des elektrischen Schalters als Ruhekontakt, dadurch gekennzeichnet, daß der metallische Einschubrahmen (11) eine ihm gegenüber isolierte Kontaktfeder (24) trägt, deren freies Ende (27) den einen Schalterkontakt bildet und nach dem vollen Einschub des Zusatzgeräts (10) in den Einschubrahmen (11) auf einer kleinen elektrisch leitenden und den anderen Schalterkontakt bildenden Fläche (28) der Seitenwand (16) des Zusatzgerätes aufliegt, bei geringer gegenseitiger Verschiebung von Zusatzgerät und Einschubrahmen dagegen auf eine längs der Seitenwand vorgesehene, elektrisch nicht leitende Gleitbahn 29 aufläuft.

3. Diebstahlsicherung nach Anspruch 1 mit Ausbildung des elektrischen Schalters als Arbeitskontakt und mit Verrastung durch von Seitenwänden des Gerätgehäuses in Rastfenster des Einschubrahmens enspringende federnde Rastnasen, dadurch gekennzeichnet, daß der metallische Einschubrahmen (11) eine ihm gegenüber elektrisch isolierte Kontaktfeder (24) trägt, deren freies Ende (27) ein Rastfenster (21) übergreift und den einen Schalterkontakt bildet und im teilweise entspannten Zustand auf dem den anderen Schalterkontakt bildenden Einschubrahmen (11) aufliegt und den Schalter schließt, auf Dauer der Verrastung dagegen von einer in das Rastfenster (21) ein springenden Rastnase (18) vom Einschubrahmen (11) abgehoben und gespannt wird, so daß der elektrische Schalter offen ist.

4. Diebstahlsicherung nach den Ansprüchen 1 bis 3, dadurch gekennzeichnet, daß das freie und kontaktbildende Ende (27) der Kontaktfeder (24) zur übrigen Federfläche nach unten abgewinkelt und ihre kontaktbildende Stirn quer zur Federachse leicht gewölbt oder eingerollt und gegebenenfalls oberflächen-vergütet ist.

**Claims**

1. Anti-theft device for optional equipment (10) fitted in motor vehicles, in particular car radios, cassette players and the like, which are pushed into a slide-in frame (11), which is fixed in an installation opening in a motor vehicle wall (12), from the front side thereof and are mechanically connected in detachable manner to it or to the installation wall, characterized in that the housing (15) of the optional equipment (10) and the metal slide-in frame (11) are parts of an electrical switch (24, 27, 28 and 24, 27, 11, 18, respectively), which is activated by their relative displacement and sets off an alarm system.

2. Anti-theft device according to Claim 1 with the electrical switch designed as a normally-closed contact, characterized in that the metal slide-in frame (11) bears a contact spring (24), from which it is insulated, the free end (27) of which forms the one switch contact and, after complete insertion of the optional equipment (10) into the slide-in frame (11), rests on a small electrically conductive area (28) of the side wall (16) of the optional equipment, which forms the other switch contact, but, if there is slight relative displacement of optional equipment and slide-in frame, runs onto an electrically non-conductive slideway 29 provided along the side wall.

3. Anti-theft device according to Claim 1 with the electrical switch designed as a normally-open contact and with interlocking by means of resilient catches on side walls of the equipment housing clipping into notches of the slide-in frame, characterized in that the metal slide-in frame (11) bears a contact spring (24), from which it is electrically insulated, the free end (27) of which engages in a notch (21) and forms the one switch contact and, in the partially relieved state, rests on the slide-in frame (11), which forms the other switch contact, and closes the switch, but during the interlock is lifted out of the slide-in frame (11) and tensioned by a catch (18) clipping into the notch (21).

4. Anti-theft device according to Claims 1 to 3, characterized in that the free, contact-forming end (27) of the contact spring (24) is bent off downward relative to the rest of the spring area and its contact-forming face is slightly domed or curled transversely to the spring axis and in some cases is surface-treated.

**Revendications**

1. Moyen anti-vol pour des accessoires (10) montés dans un véhicule à moteur notamment des auto-radios, des lecteurs de cassettes ou accessoires analogues et qui sont introduits par l'avant dans un châssis enfichable (11) lui-même fixé dans une ouverture de la paroi (12) du véhicule, l'accessoire étant relié de manière amovible mécaniquement avec le châssis ou la paroi, moyen caractérisé en ce que le boîtier (15) de l'accessoire (10) et le châssis enfichable (11), métallique constituent les parties d'un commutateur électrique (24, 27, 28 ou 24, 27, 11, 18) qui est mis en œuvre par sa translation réciproque et met en fonctionnement une installation d'alarme.

2. Moyen anti-vol selon la revendication 1 dans lequel le commutateur électrique est réalisé sous forme de contact de repos, moyen caractérisé en ce que le châssis enfichable (11) métallique comporte un ressort de contact (24) isolé par rapport à celui-ci et dont l'extrémité libre (27) forme l'un des contacts du commutateur et après l'introduction complète de l'accessoire (10) dans le châssis (11) vient s'appuyer sur une petite surface (28) conductrice d'électricité et formant l'autre contact du commutateur dans la paroi latérale (16) de l'accessoire, et lors d'une faible translation réciproque de l'accessoire et du châssis, ce ressort glisse par contre sur un chemin de glissement (29) non conducteur d'électricité prévu le long de la paroi latérale.

3. Moyen anti-vol selon la revendication 1 dont le commutateur électrique est réalisé sous forme de contact de travail et comportant un moyen d'encliquetage par des becs d'encliquetage s'introduisant de manière élastique à travers les parois latérales du boîtier de l'appareil dans des fenêtres d'encliquetage du châssis, moyen caractérisé en ce que le châssis enfichable (11) métallique porte un ressort de contact (24) isolé électriquement par rapport au châssis, ressort dont l'extrémité libre (27) passe par-dessus la fenêtre d'encliquetage (21) et forme l'un des contacts du commutateur et à l'état partiellement détendu vient s'appuyer sur le châssis enfichable (11) formant l'autre contact du commutateur et fermant le commutateur et en continu le moyen d'encliquetage est par contre soulevé du châssis enfichable (11) par un bec d'encliquetage (18) venant dans la fenêtre d'encliquetage (21) en se tendant pour ouvrir le commutateur électrique.

4. Moyen anti-vol selon les revendications 1 à 3, caractérisé en ce que l'extrémité (27) libre, établissant le contact du ressort de contact (24) est recourbée vers le bas par rapport aux autres surfaces de ressort et sa face frontale formant le contact est légèrement bombée par rapport à l'axe du ressort ou est enroulée et le cas échéant présente une surface affinée.

Fig. 1

# Fig. 2

# Fig. 3

Fig. 4

Fig. 5